# EUROPEAN PATENT SPECIFICATION

(11) **EP 3 173 170 B1**
(45) Date of publication and mention of the grant of the patent: **07.11.2018**
(21) Application number: 16199259.9
(22) Date of filing: 17.11.2016
(51) Int. Cl.: B23B 45/02, B25F 5/00, H02K 7/14, H02K 9/06, H02K 11/33

(54) **ELECTRIC TOOL**
ELEKTROWERKZEUG
OUTIL ÉLECTRIQUE

(30) Priority: 25.11.2015 JP 2015229844
(43) Date of publication of application: 31.05.2017
(73) Proprietor: Panasonic Intellectual Property Management Co., Ltd., Osaka-shi, Osaka 540-6207 (JP)
(72) Inventor: Kitamura, Kouta, Osaka, Osaka 540-6207 (JP); Sawano, Fumiaki, Osaka, Osaka 540-6207 (JP); Shimizu, Hidenori, Chuo-ku, Osaka 540-6207 (JP); Kudou, Toshio, Chuo-ku, Osaka 540-6207 (JP)
(74) Representative: Appelt, Christian W.

(56) References cited:
- EP-A1- 2 689 897
- EP-A2- 2 298 503
- US-A1- 2013 313 925

## Description

### BACKGROUND OF THE INVENTION

### 1. Field of the Invention

The present invention relates to an electric tool, and in particular to the electric tool including a cooling fan arranged on a back side of a housing.

### 2. Description of the Related Art

In an electric tool that rotates and drives a tip tool by means of a motor, a brushless motor in which electric power generated in an inverter circuit is supplied to a coil of a stator to cause a rotor to rotate is used. Since a switching element constituting the inverter circuit is driven by a large current, the switching element is preferably cooled efficiently.

JP 2012-76179 A discloses an electric tool having a motor, a housing, a switching element that drives the motor, and a power transmitter that converts rotational force of the motor to drive a tip tool. The electric tool disclosed in JP 2012-76179 A is configured such that the power transmitter is housed in a metal case, a heatsink of the switching element is arranged in contact with a part of the case, and heat in the switching element is released through the case.

JP 2013-834 A discloses an electric tool having a motor, a housing, a switching element that controls electric conduction to the motor, and a power transmitter that transmits power from the motor to an outputter. The electric tool disclosed in JP 2013-834 A is configured such that a circuit board is arranged between the motor and the power transmitter, and the switching element is brought into contact with a metal gear case housing the power transmitter in order to improve cooling efficiency for the switching element.

JP 2012-76179 A and JP 2013-834 A disclose that the switching element of the circuit board is brought into contact with the housing case for the power transmitter directly or indirectly via the heatsink, and heat in the switching element is released to the housing case. However, the power transmitter is driven by the motor at a high speed, thereby generating frictional heat. Particularly in recent years, miniaturization, a reduction in weight, and an increase in output of the electric tool have progressed, and the frictional heat generated in the power transmitter has increased more than ever, whereby the housing case tends to increase in temperature. Therefore, it is not preferable that the switching element of the circuit board is brought into contact with the housing case for the power transmitter, and other measures need to be taken in order to cool the circuit board efficiently.

US 2003/0313925 A1 discloses a power tool with a combined printed circuit board (PCB) that reduces internal wiring of the power tool and provides a large amount of air flow to internal components. The combined PCB has a surfboard shape and includes a motor control unit and power switching elements (Field Effect Transistors or FETs). In one instance, the combined PCB has a doughnut shape and is located coaxially with a motor shaft. The combined PCB may be positioned between a doughnut-shaped control PCB and the motor.

EP 2 689 897 A1 discloses an electric tool including a motor having a rotor and a cylindrical stator surrounding the rotor, a circuit board provided with a switching element for controlling rotation of the rotor, a heat radiation member to be transferred heat from the switching element, and a cooling fan for generating a cooling wind, which are housed in a body housing. The body housing has a cooling passage R for passing therethrough the cooling wind. The cooling passage R is formed so that the cooling wind flows from a center side toward an outer periphery of the heat radiation member and thereafter flows over a front surface of the circuit board.

### SUMMARY OF THE INVENTION

The present invention has been made in consideration of these circumstances, and an object thereof is to provide a structure for cooling the inside of a housing of an electric tool efficiently.

In order to solve the above-mentioned problem, an electric tool according to a certain aspect of the present invention includes, within a housing: a cooling fan; a motor arranged in front of the cooling fan; a circuit board arranged in front of the motor; a heatsink arranged in front of the circuit board; and a drive block arranged in front of the heatsink, and including a power transmitter that transmits rotational force of the motor to a tip tool, and the heatsink and the drive block are arranged apart from each other, wherein the heatsink is arranged between the circuit board and the drive block; and an air gap providing an air passage for cooling the heatsink is provided between the drive block and the heatsink.

### BRIEF DESCRIPTION OF THE DRAWINGS

Fig. 1 is a schematic diagram of an electric tool according to an example of the present invention.
Fig. 2 is a view illustrating a cross-sectional configuration of the electric tool.
Fig. 3 is a view illustrating an exemplary structure of a heatsink that cools a circuit board.
Fig. 4 is a diagram illustrating a partial cross-section of the circuit board and the heatsink.
Fig. 5A is a view illustrating a configuration of a stator.
Fig. 5B is a view illustrating a planar configuration of the heatsink and the circuit board.
Fig. 6 is a diagram for explaining a flow of air.

### DETAILED DESCRIPTION OF THE INVENTION

The invention will now be described by reference to the preferred embodiments. This does not intend to limit the scope of the present invention, but to exemplify the invention.

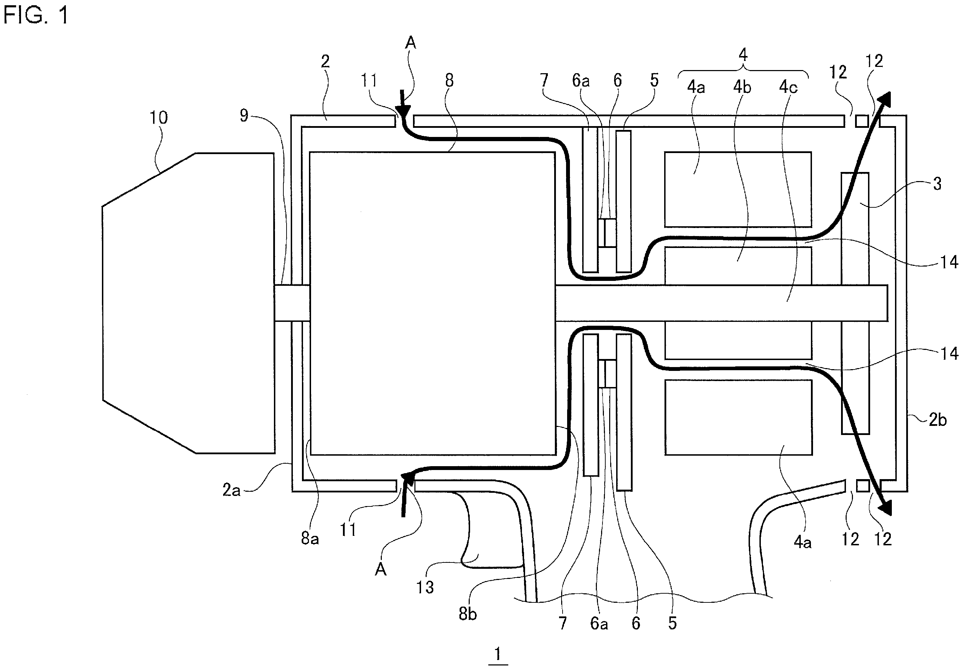

A schematic diagram of an electric tool according to an example of the present invention is illustrated in Fig. 1. The electric tool 1 has a housing 2. In the example, an end at which a chuck mechanism 10 is provided is referred to as a front end 2a, and an opposite side thereof is referred to as a rear end 2b. The electric tool 1 includes, within the housing 2, a cooling fan 3, a motor 4, a circuit board 5, a heatsink 7, and a drive block 8. The cooling fan 3 is arranged in the vicinity of the rear end 2b. The motor 4 is arranged in front of the cooling fan 3. The circuit board 5 is arranged in front of the motor 4. The heatsink 7 is arranged in front of the circuit board 5. The drive block 8 is arranged in front of the heatsink 7. The drive block 8 has a spindle 9 that is an output shaft. The chuck mechanism 10 is connected to the spindle 9, and a tip tool such as a drill and a driver is attachable and detachable to and from the chuck mechanism 10. The drive block 8 includes a power transmitter that transmits rotational force of the motor 4 to the tip tool. A switch 13 that is operated by an operator is provided in the housing 2 so as to protrude therefrom. Once the operator pulls the switch 13, the motor 4 rotates, whereby the spindle 9 of the drive block 8 drives the tip tool.

The motor 4 is an inner rotor type brushless motor, and includes a rotor (rotator) 4b, a stator (stationary part) 4a, and a motor shaft 4c. The rotor 4b has a plurality of permanent magnets. The stator 4a is fixed around the rotor 4b with a void 14 provided. The motor shaft 4c is supported by a bearing fixed to the housing 2 so as to be able to rotate. The rotor 4b is attached to the motor shaft 4c, and rotates integrally with the motor shaft 4c. The stator 4a has a stator core and a plurality of coil parts wound around a plurality of teeth parts of the stator core. In a case where the motor 4 is a three-phase motor, six coil parts may be provided.

A switching element 6 mounted on the circuit board 5 is a power element such as a field effect transistor (FET) and an insulated gate bipolar transistor (IGBT), and constitutes an inverter circuit. The switching element 6 supplies a drive current to the coil part of the stator 4a. In front of the circuit board 5, the metal heatsink 7 for releasing heat generated in the switching element 6 is provided. The switching element 6 is in contact with the heatsink 7 directly or indirectly. In the example illustrated in Fig. 1, it is illustrated that the switching element 6 is in contact with the heatsink 7 indirectly via a heat transfer member 6a. The circuit board 5 and the heatsink 7 have openings for allowing the motor shaft 4c to pass therethrough. As described later, a gap between the openings and the motor shaft 4c forms a flow passage for cooling air.

The drive block 8 has a gear case formed in a substantially cylindrical shape. At least a part of the gear case is formed of a metal material. The gear case is fixed to a support member (not illustrated) projecting to the inside of the housing 2. The power transmitter that transmits the rotational force of the motor 4 to the tip tool attached to the chuck mechanism 10 is provided within the gear case. The power transmitter may have an epicyclic gear speed reduction mechanism that is engaged with a pinion gear of the motor shaft 4c of the motor 4. The power transmitter is preferably configured such that a transmission gear ratio is switchable, whereby rotational speed of the spindle 9 that is the output shaft can be adjusted.

In the housing 2, an inlet port 11 is formed at a position on a lateral side or a front side of the drive block 8. When a front end side of the drive block 8 is defined as a gear case front end 8a, and a rear end side is defined as a gear case rear end 8b, the lateral side of the drive block 8 represents a region of the housing 2 surrounding a side surface of the case between the gear case front end 8a and the gear case rear end 8b, and the front side of the drive block 8 represents a region of the housing 2 on a forward side beyond the gear case front end 8a. In other words, the inlet port 11 is formed on a forward side beyond the gear case rear end 8b of the drive block 8. In Fig. 1, the example of forming the inlet port 11 in the region on the lateral side of the drive block 8 is illustrated. The inlet port 11 is, for example, a rectangular slit, and a plurality of inlet ports 11 may be formed in the housing 2. In the housing 2, another inlet port may be provided at a position on a rear side beyond the gear case rear end 8b of the drive block 8. An outlet port 12 is formed on a side close to the rear end 2b of the housing 2. The outlet port 12 is preferably formed on a rear side of the stator 4a.

The cooling fan 3 is connected to the motor shaft 4c on a backward side of the motor 4, and rotates integrally with the motor shaft 4c. Once the operator pulls the switch 13, the motor shaft 4c rotates, and the cooling fan 3 rotates accordingly. An arrow A represents a flow of air that is taken into the housing 2 through the inlet port 11 due to the rotation of the cooling fan 3. The air flowing in through the inlet port 11 cools a side surface of the drive block 8, and then cools the heatsink 7. After that, the air passes through the gap between the motor shaft 4c and the openings in the central parts of the heatsink 7 and the circuit board 5, cools the stator 4a and the rotor 4b, and is discharged to the outside through the outlet port 12.

The electric tool 1 in the example is configured such that the cooling fan 3, the motor 4, the circuit board 5, the heatsink 7, and the drive block 8 are arranged in series from the rear end 2b toward the front end 2a, and the inlet port 11 of the housing 2 is provided on the front side beyond the gear case rear end 8b of the drive block 8. Since the electric tool 1 employs such a structure, the electric tool 1 can cool the drive block 8 as well as the motor 4, the circuit board 5, and the heatsink 7. While the motor 4 is driven, the power transmitter of the drive block 8 generates frictional heat. Therefore, the gear case of the drive block 8 is efficiently cooled, whereby stable operation of the electric tool 1 can be realized.

In addition, the electric tool 1 is configured such that the heatsink 7 and the drive block 8 are arranged apart from each other. Since the heatsink 7 and the drive block 8 are not in contact with each other, an air gap is provided between the heatsink 7 and the drive block 8 so as to prevent heat generated in the drive block 8 from being transferred to the heatsink 7. Consequently, cooling efficiency for the switching element 6 can be enhanced.

Between the heatsink 7 and the drive block 8, a spacer for preventing them from coming into contact with each other may be provided. The heatsink 7 and the drive block 8 are fixed to the housing 2 by means of a fixture such as a screw. Even when loosening or the like of the fixture occurs, since the spacer is provided between the heatsink 7 and the drive block 8, they can be prevented from coming into contact with each other. Note that the spacer is preferably formed of a material that hardly transfers heat, an example of which is a resin material.

It has been described that at least a part of the gear case of the drive block 8 is formed of a metal material. However, for example, the gear case rear end 8b facing the heatsink 7 may be formed of a resin material. When the gear case rear end 8b is formed of a resin material, heat transfer from the gear case rear end 8b to the heatsink 7 can be suppressed.

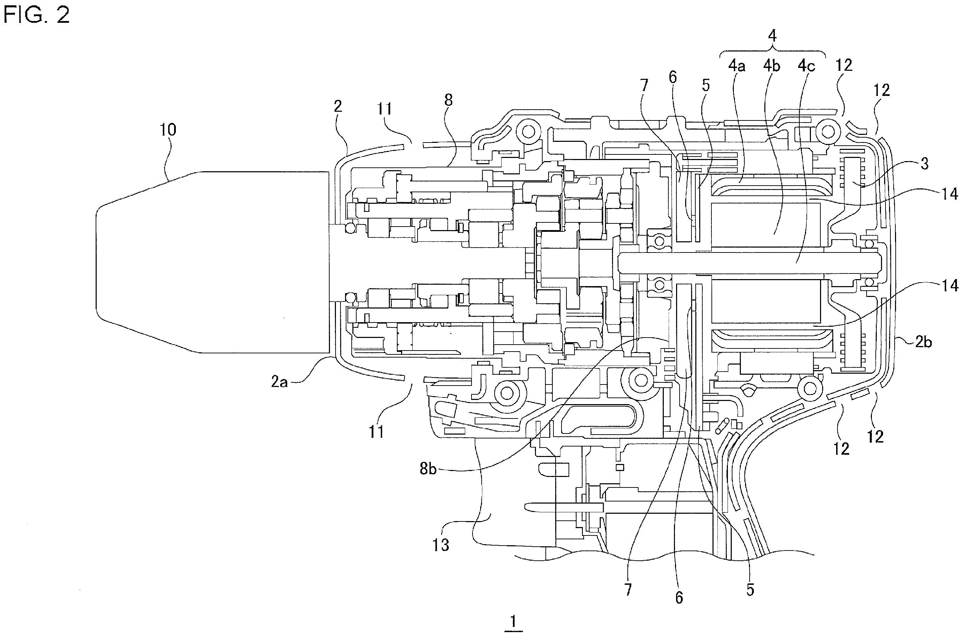

A cross-sectional configuration of the electric tool 1 is illustrated in Fig. 2. The cross-sectional configuration in Fig. 2 is a detailed illustration of the schematic configuration illustrated in Fig. 1. As illustrated in Fig. 2, the electric tool 1 is configured such that the cooling fan 3, the motor 4, the circuit board 5, the heatsink 7, and the drive block 8 are arranged in series from the rear end 2b toward the front end 2a, and the inlet port 11 is provided on the front side beyond the gear case rear end 8b of the drive block 8. The heatsink 7 and the gear case rear end 8b of the drive block 8 are arranged apart from each other so as to prevent heat generated in the drive block 8 from being transferred to the heatsink 7.

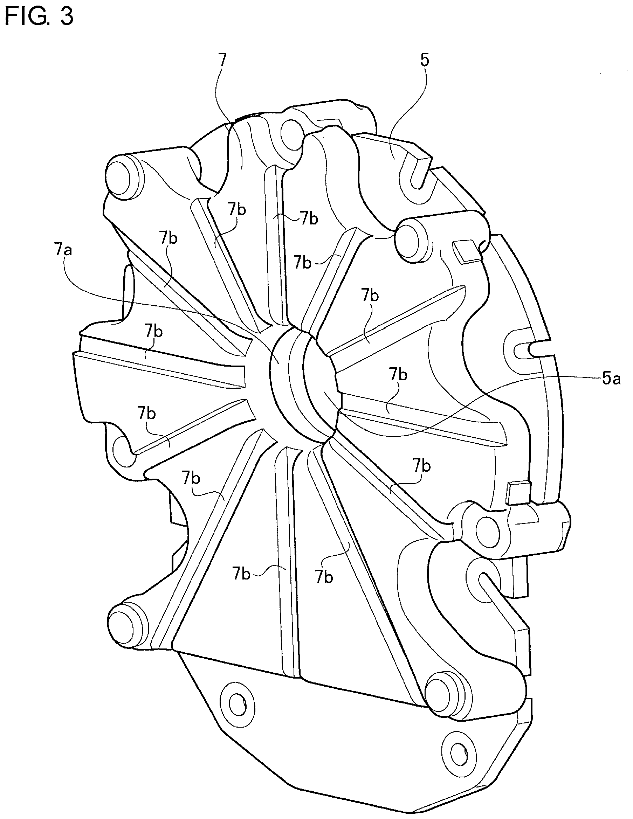

An exemplary structure of the heatsink 7 that cools the circuit board 5 is illustrated in Fig. 3. The heatsink 7 has, in the central part, the opening 7a for allowing the motor shaft 4c to pass therethrough. The circuit board 5 has, in the central part, the opening 5a for allowing the motor shaft 4c to pass therethrough. The gap between the opening 7a and the motor shaft 4c and the gap between the opening 5a and the motor shaft 4c form the flow passage for air.

The heatsink 7 illustrated in Fig. 3 has, on a surface facing the drive block 8, a plurality of guides 7b that serves as flow passages for air. The guide 7b may be formed as such a groove that the heatsink 7 is cut out from an outer periphery to the opening 7a. Referring to Fig. 1, air taken in through the inlet port 11 flows on the heatsink 7 in a direction from the outer periphery toward the opening 7a. Due to a recent request for miniaturization, an interval between the gear case rear end 8b and the heatsink 7 cannot be widely provided, and the narrow interval imposes resistance to airflow. Therefore, it is preferable that the plurality of guides 7b that serves as the flow passages for air is formed in the heatsink 7, whereby the flow passage resistance is reduced, and the cooling efficiency is enhanced.

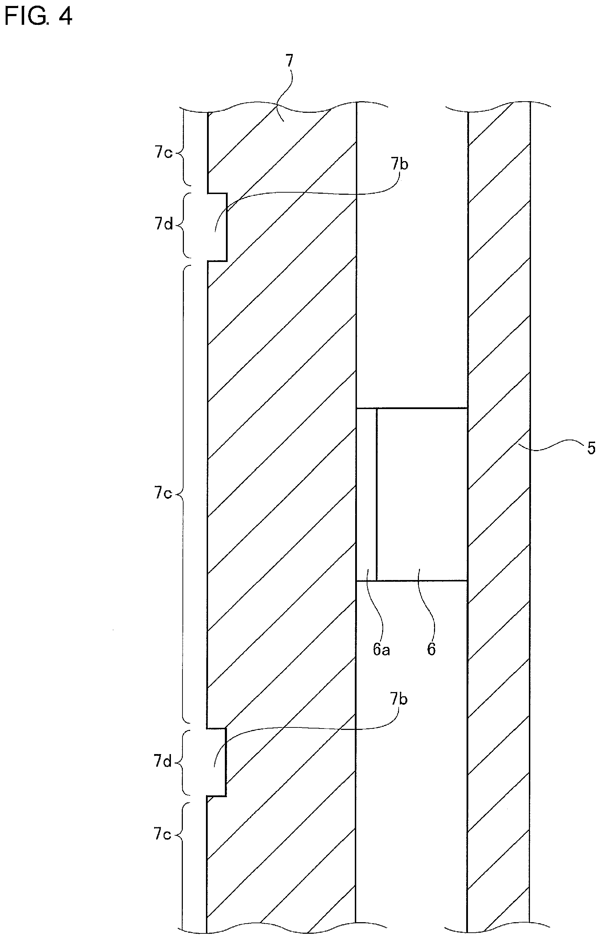

A partial cross-section of the circuit board 5 and the heatsink 7 is illustrated in Fig. 4. Since the guide 7b, namely, the groove, is provided in the heatsink 7 as illustrated in Fig. 3, the heatsink 7 has a thick part 7c and a thin part 7d that is thinner than the thick part 7c. More specifically, the thin part 7d is a region in which the guide 7b is formed, and the thick part 7c is a region in which the guide 7b is not formed.

The larger the volume of a heat dissipator is, the higher the heat dissipation capability of the heat dissipator is. Therefore, comparing a unit region including the thin part 7d and a unit region not including the thin part 7d, the unit region not including the thin part 7d has a higher heat dissipation capability. Therefore, the switching element 6 is preferably in contact with the region of the thick part 7c directly or indirectly via the heat transfer member 6a. In other words, an upper surface of the switching element 6 is preferably in contact with the region not including the thin part 7d directly or indirectly. Consequently, the cooling efficiency for the switching element 6 can be improved.

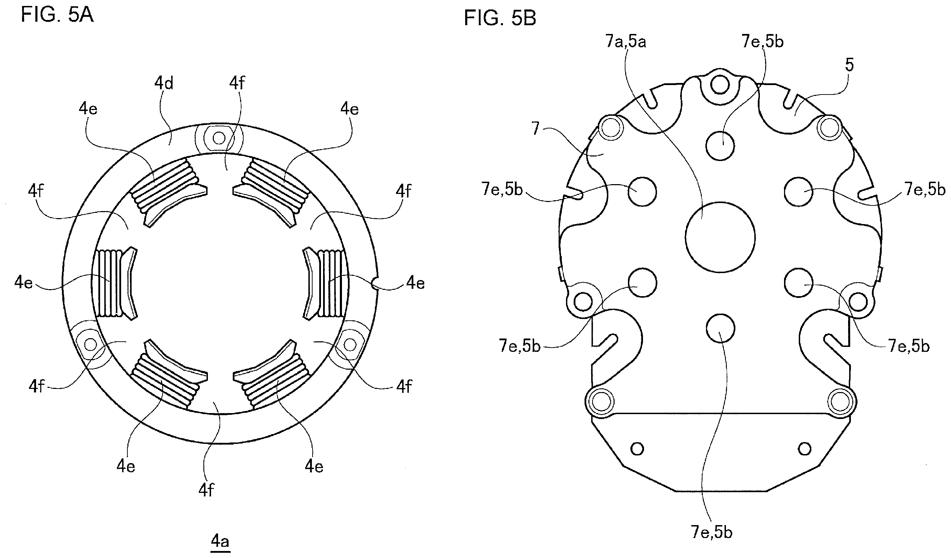

A configuration of the stator 4a is illustrated in Fig. 5A. The stator 4a has the annular stator core 4d and the plurality of coil parts 4e wound around the plurality of teeth parts of the stator core 4d. As illustrated in Fig. 5A, the plurality of coil parts 4e is provided to be separated from one another, and a space 4f extending in parallel with an axial direction is formed between the adjacent coil parts 4e. Since the coil part 4e receives the supply of the drive current from the switching element 6 and generates heat, the coil part 4e is preferably cooled efficiently.

A planar configuration of the heatsink 7 and the circuit board 5 is illustrated in Fig. 5B. The heatsink 7 and the circuit board 5 respectively have vents 7e and 5b for allowing air to flow in between the adjacent coil parts 4e of the stator 4a. The vent 7e formed in the heatsink 7 and the vent 5b formed in the circuit board 5 are arranged so as to overlap each other. The space 4f between the adjacent coil parts 4e is arranged in a direction in which air passes through the vents 7e and 5b. Therefore, air taken in through the inlet port 11 passes through the vent 7e of the heatsink 7 and the vent 5b of the circuit board 5 to be introduced to the space 4f between the coil parts 4e, thereby cooling the coil parts 4e efficiently.

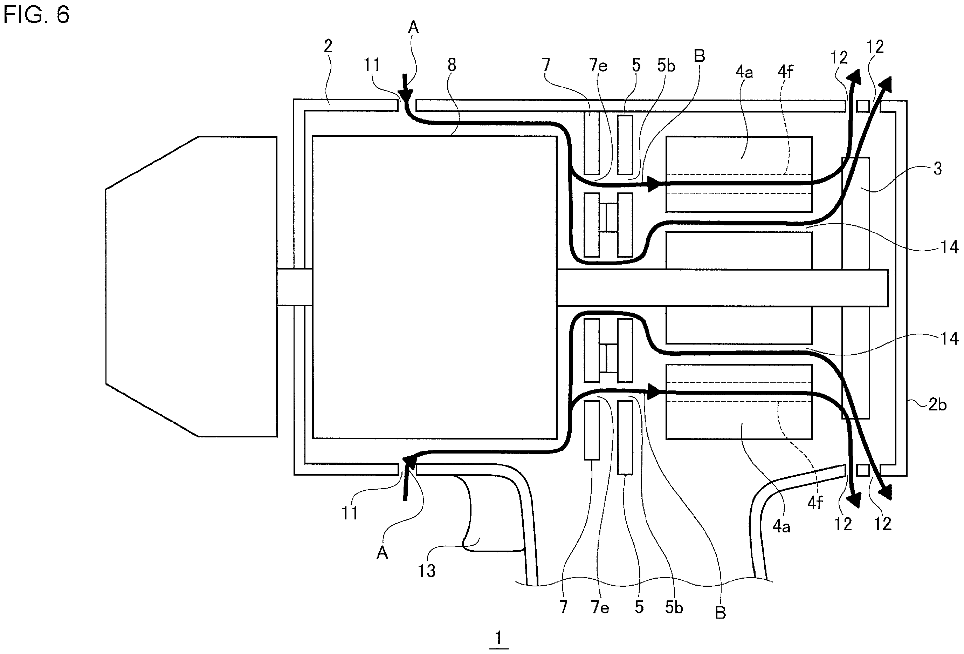

Fig. 6 is a diagram for explaining a flow of air. Once the operator pulls the switch 13, the cooling fan 3 rotates together with the motor 4, and air flows in through the inlet port 11. The flowing air cools the side surface of the drive block 8, and then cools the surface of the heatsink 7. At this time, as illustrated by an arrow B, part of the air is sucked in through the vent 7e of the heatsink 7, passes through the vent 5b of the circuit board 5, and enters the space 4f of the stator 4a. Consequently, the coil parts 4e arranged in the vicinity of the space 4f can be cooled efficiently.

Note that even when the vents 7e and 5b are not formed, air enters the space 4f of the stator 4a. However, when the vents 7e and 5b are formed, the amount of air that flows through the space 4f can be increased.

A summary of an aspect of the present invention is as follows:
An electric tool (1) according to a certain aspect of the present invention includes, within a housing (2): a cooling fan (3); a motor (4) arranged in front of the cooling fan (3) ; a circuit board (5) arranged in front of the motor (4); a heatsink (7) arranged in front of the circuit board (5) ; and a drive block (8) arranged in front of the heatsink (7), and including a power transmitter that transmits rotational force of the motor (4) to a tip tool. The heatsink (7) and the drive block (8) are arranged apart from each other.

Preferably, in the housing (2), an inlet port (11) is formed at a position on a lateral side or a front side of the drive block (8), and the cooling fan (3) takes air in through the inlet port (11), and cools the drive block (8), the heatsink (7), the circuit board (5), and the motor (4).

The heatsink (7) may have, on a surface facing the drive block (8), a guide (7b) that serves as a flow passage for air.

Preferably, a plurality of switching elements (6) is mounted on the circuit board (5), the heatsink (7) has a thick part (7c) and a thin part (7d) that is thinner than the thick part (7c), and the switching element (6) is in contact with a region of the thick part (7c) of the heatsink (7) directly or indirectly.

The motor (4) may have a plurality of coil parts (4e) provided to be separated from one another, and the heatsink (7) and the circuit board (5) may have vents (7e, 5b) for allowing air to flow in between the adjacent coil parts (4e) of the motor (4) .

The description of the present invention has been provided so far with reference to the example. This example is merely an illustration, and a person skilled in the art will understand that various modifications can be made to combinations of the respective components or the respective processing processes, and these modifications are also within the range of the present invention.

## Claims

1. An electric tool (1) comprising, within a housing (2):
a cooling fan (3);
a motor (4) arranged in front of the cooling fan (3);
a circuit board (5) arranged in front of the motor (4);
a heatsink (7); and
a drive block (8) arranged in front of the heatsink (7), and including a power transmitter that transmits rotational force of the motor (4) to a tip tool, wherein the heatsink (7) and the drive block (8) are apart from each other,
**characterized in that**
the heatsink (7) is arranged between the circuit board (5) and the drive block (8); and
an air gap providing an air passage for cooling the heatsink (7) is provided between the drive block (8) and the heatsink (7).

2. The electric tool (1) according to claim 1, wherein
in the housing (2), an inlet port is formed at a position on a lateral side or a front side of the drive block (8), and
the cooling fan (3) takes air in through the inlet port, and cools the drive block (8), the heatsink (7), the circuit board (5), and the motor (4).

3. The electric tool (1) according to claim 1 or 2, wherein
the heatsink (7) has, on a surface facing the drive block (8), a guide (7b) that serves as a flow passage for air.

4. The electric tool (1) according to any of claims 1 to 3, wherein
a plurality of switching elements (6) are mounted on the circuit board (5),
the heatsink (7) has a thick part and a thin part that is thinner than the thick part, and
the switching element (6) is in contact with a region of the thick part of the heatsink (7)directly or indirectly.

5. The electric tool (1) according to any of claims 1 to 4, wherein
the motor (4) has a plurality of coil parts provided to be separated from one another, and
the heatsink (7)and the circuit board (5) have vents inside the heatsink (7)and the circuit board (5) respectively for allowing air to pass through the heatsink (7)and the circuit board (5) and flow in between the adjacent coil parts of the motor (4).

## Patentansprüche

1. Elektrowerkzeug (1), das in einem Gehäuse (2) aufweist:
ein Kühlgebläse (3);
einen Motor (4), der vor dem Kühlgebläse (3) angeordnet ist;
eine Leiterplatte (5), die vor dem Motor (4) angeordnet ist;
einen Kühlkörper (7); und
einen Antriebsblock (8), der vor dem Kühlkörper (7) angeordnet ist und einen Leistungsträger enthält, das eine Drehkraft des Motors (4) auf ein Spitzenwerkzeug überträgt,
wobei der Kühlkörper (7) und der Antriebsblock (8) voneinander getrennt angeordnet sind,
**dadurch gekennzeichnet, dass**
der Kühlkörper (7) zwischen der Leiterplatte (5) und dem Antriebsblock (8) angeordnet ist; und
ein Luftspalt, der einen Luftkanal zur Kühlung des Kühlkörpers (7) bildet, und zwischen dem Antriebsblock (8) und dem Kühlkörper (7) angeordnet ist.

2. Elektrowerkzeug (1) nach Anspruch 1, wobei
in dem Gehäuse (2) ein Einlasskanal an einer Stelle auf einer Lateralseite oder einer Vorderseite des Antriebsblocks (8) gebildet ist, und
das Kühlgebläse (3) Luft durch den Einlasskanal einsaugt und den Antriebsblock (8), den Kühlkörper (7), die Leiterplatte (5) und den Motor (4) kühlt.

3. Elektrowerkzeug (1) nach Anspruch 1 oder 2, wobei der Kühlkörper (7) auf einer Fläche, die dem Antriebsblock (8) zugewandt ist, ein Führungsmittel (7b) hat, das als ein Strömungskanal für Luft dient.

4. Elektrowerkzeug (1) nach einem beliebigen der Ansprüche 1 bis 3, wobei
auf der Leiterplatte (5) mehrere Schaltelemente (6) befestigt sind,
der Kühlkörper (7) einen dicken Abschnitt und einen dünnen Abschnitt, der dünner ist als der dicke Abschnitt, aufweist, und
das Schaltelement (6) mit einem Gebiet des dicken Abschnitts des Kühlkörpers (7) mittelbar oder unmittelbar in Berührung steht.

5. Elektrowerkzeug (1) nach einem beliebigen der Ansprüche 1 bis 4, wobei
der Motor (4) mehrere Spulenteile hat, die dafür ausgelegt sind, voneinander getrennt zu sein, und
der Kühlkörper (7) und die Leiterplatte (5) Entlüftungsöffnungen im Inneren des Kühlkörpers (7) bzw. der Leiterplatte (5) haben, um Luft zu erlauben, durch den Kühlkörper (7) und die Leiterplatte (5) zu strömen und zwischen den benachbarten Spulenteilen des Motors (4) zu strömen.

## Revendications

1. Outil électrique (1) comprenant, à l'intérieur d'un boîtier (2) :
un ventilateur de refroidissement (3) ;
un moteur (4) agencé en face du ventilateur de refroidissement (3) ;
une carte de circuit imprimé (5) agencée en face du moteur (4) ;
un dissipateur de chaleur (7) ; et
un bloc d'entraînement (8) agencé en face du dissipateur de chaleur (7), et comprenant un émetteur de puissance qui transfère la force de rotation du moteur (4) à un outil de pointe, dans lequel le dissipateur de chaleur (7) et le bloc d'entraînement (8) sont à l'écart l'un de l'autre,
**caractérisé en ce que** :
le dissipateur de chaleur (7) est agencé entre la carte de circuit imprimé (5) et le bloc d'entraînement (8) ; et
un entrefer fournissant un passage d'air pour refroidir le dissipateur de chaleur (7) est prévu entre le bloc d'entraînement (8) et le dissipateur de chaleur (7).

2. Outil électrique (1) selon la revendication 1, dans lequel :
dans le boîtier (2), un orifice d'entrée est formé dans une position sur un côté latéral ou un côté avant du bloc d'entraînement (8), et
le ventilateur de refroidissement (3) prélève l'air à travers l'orifice d'entrée, et refroidit le bloc d'entraînement (8), le dissipateur de chaleur (7), la carte de circuit imprimé (5) et le moteur (4).

3. Outil électrique (1) selon la revendication 1 ou 2, dans lequel :
le dissipateur de chaleur (7) a, sur une surface faisant face au bloc d'entraînement (8), un guide (7b) qui sert de passage d'écoulement pour l'air.

4. Outil électrique (1) selon l'une quelconque des revendications 1 à 3, dans lequel :
une pluralité d'éléments de commutation (6) est montée sur la carte de circuit imprimé (5),
le dissipateur de chaleur (7) a une partie épaisse et une partie fine qui est plus fine que la partie épaisse, et
l'élément de commutation (6) est en contact avec une région de la partie épaisse du dissipateur de chaleur (7) directement ou indirectement.

5. Outil électrique (1) selon l'une quelconque des revendications 1 à 4, dans lequel :
le moteur (4) a une pluralité de parties de bobine prévues pour être séparées les unes des autres, et
le dissipateur de chaleur (7) et la carte de circuit imprimé (5) ont des évents respectivement à l'intérieur du dissipateur de chaleur (7) et de la carte de circuit imprimé (5) pour permettre le passage de l'air à travers le dissipateur de chaleur (7) et la carte de circuit imprimé (5) et son écoulement entre les parties de bobine adjacentes du moteur (4).
